# EUROPEAN PATENT APPLICATION

(11) **EP 2 453 110 A1**
(43) Date of publication of application: **16.05.2012**
(21) Application number: 11186591.1
(22) Date of filing: 25.10.2011
(51) Int. Cl.: F01D 11/00

(54) **Method of forming a seal in a gas turbine engine, corresponding blade airfoil and seal combination and gas turbine engine**

(30) Priority: 25.10.2010 US 910989
(71) Applicant: United Technologies Corporation, Hartford, CT 06101 (US)
(72) Inventor: Strock, Christopher W., Kennebunk, ME Maine 04043 (US); Lageux, Ken, Berlin, CT Connecticut 06037 (US); Baumann, Paul W., Amesbury, MA Massachusetts 01913 (US); Bintz, Matthew E., West Hartford, CT Connecticut 06107 (US); Stowe, Thomas W., Hebron, CT Connecticut 06248 (US); Zajchowski, Paul H., Enfield, CT Connecticut 06082 (US)
(74) Representative: Tomlinson, Kerry John

(57) **Abstract**

A compressor rotor seal includes a bare radial inward end of a vane (26) in proximity to a rotor (50) surface coated with an abrasive material.

## Description

### BACKGROUND

Gas turbine engines include compressor rotors including a plurality of rotating compressor blades. Minimizing the leakage of air, such as between tips of rotating blades and a casing of the gas turbine engine increases the efficiency of the gas turbine engine as the leakage of air over the tips of the blades can cause aerodynamic efficiency losses. To minimize this, the gap at tips of the blades is set small and at certain conditions, the blade tips may rub against and engage an abradable seal on the casing of the gas turbine. The abradability of the seal material prevents damage to the blades while the seal material itself wears to generate an optimized mating surface and thus reduce the leakage of air.

Abradable seals have also been used in turbines to reduce the gap between a rotor and a vane. Thermally sprayed abradable seals have been used in gas turbine engines since the late 1960s. The seals have been made as coatings from composite materials that derive their abradability from the use of low shear strength materials or from a porous, friable coating.

Cantilevered vane rotor coatings have, nevertheless, room for improvement. The coating should not be too thermally conductive, such as an alumina coating. This could cause thermal expansion induced runaway events. Use of a more insulative coating such as zirconia could spall during deep or high rate rub interactions with the vanes. Both situations can result in having to establish more open clearances between the rotor shaft and the vane tips.

In the past, cantilevered vane rubs are typically limited to less than 2 mils (50.4 microns) and have less than full circumference contact due to the risks of high rub forces, coating spallation or a thermal runaway event where the heat from the rub causes thermal expansion of the rotor. The rotor, when heated sufficiently, can grow out to interfere with the vanes. The result can be a burn through causing holes in the rotating shaft, which can cause subsequent unscheduled engine removal.

A need exists for a coating that can prevent the rotor from being damaged during runaway events while still allowing the vanes to maintain acceptable sealing gap dimensions.

### SUMMARY

A gas turbine engine component includes an airfoil having a radial outward end and a radial inward end. A seal member is positioned adjacent to the radial inward end of the airfoil. The seal member is coated with an abrasive material and the tip of the radial inward end of the airfoil is bare metal.

### BRIEF DESCRIPTION OF THE DRAWINGS

FIG. 1 illustrates a simplified cross-sectional view of a standard gas turbine engine.

FIG. 2 illustrates a simplified cross sectional view of a rotor shaft inside a casing illustrating the relationship of the rotor and vanes taken along the line 2-2 of FIG. 1, not to scale.

FIG. 3 is a cross sectional view taken along line 3-3 of FIG. 2, not to scale, of a prior art seal.

FIG. 4 is a cross sectional view taken along line 3-3 of FIG. 2 of one embodiment of the invention.

### DETAILED DESCRIPTION

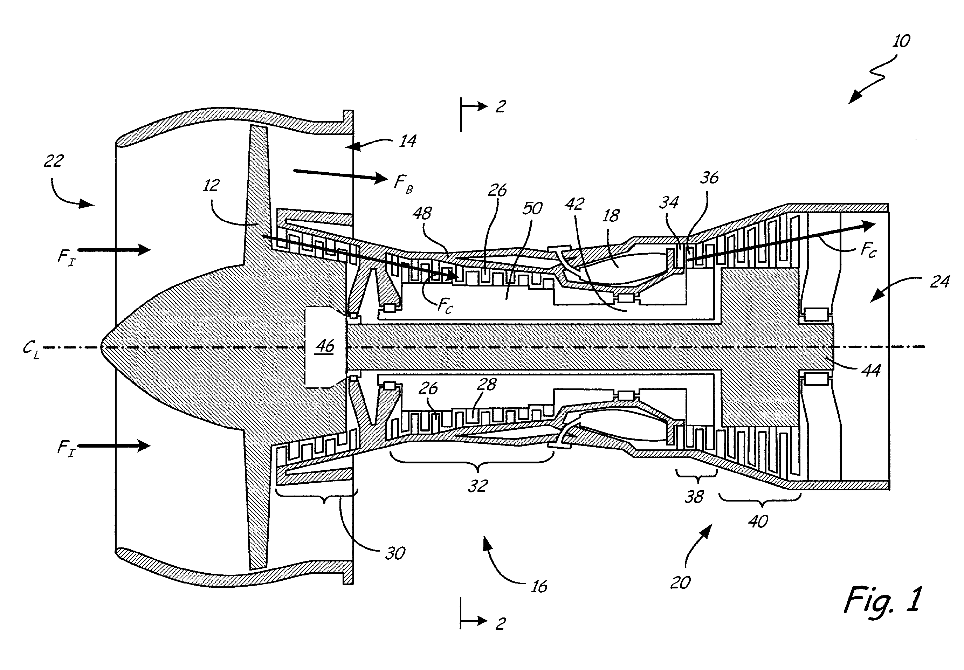

FIG. 1 is a cross-sectional view of gas turbine engine 10, in a turbofan embodiment. As shown in FIG. 1, turbine engine 10 comprises fan 12 positioned in bypass duct 14, with bypass duct 14 oriented about a turbine core comprising compressor (compressor section) 16, combustor (or combustors) 18 and turbine (turbine section) 20, arranged in flow series with upstream inlet 22 and downstream exhaust 24.

Compressor 16 comprises stages of compressor vanes 26 and blades 28 arranged in low pressure compressor (LPC) section 30 and high pressure compressor (HPC) section 32. Turbine 20 comprises stages of turbine vanes 34 and turbine blades 36 arranged in high pressure turbine (HPT) section 38 and low pressure turbine (LPT) section 40. HPT section 38 is coupled to HPC section 32 via HPT shaft 42, forming the high pressure spool or high spool. LPT section 40 is coupled to LPC section 30 and fan 12 via LPT shaft 44, forming the low pressure spool or low spool. HPT shaft 42 and LPT shaft 44 are typically coaxially mounted, with the high and low spools independently rotating about turbine axis (centerline) C_{L}.

Fan 12 comprises a number of fan airfoils circumferentially arranged around a fan disk or other rotating member, which is coupled (directly or indirectly) to LPC section 30 and driven by LPT shaft 44. In some embodiments, fan 12 is coupled to the fan spool via geared fan drive mechanism 46, providing independent fan speed control.

As shown in FIG. 1, fan 12 is forward-mounted and provides thrust by accelerating flow downstream through bypass duct 14, for example in a high-bypass configuration suitable for commercial and regional jet aircraft operations. Alternatively, fan 12 is an unducted fan or propeller assembly, in either a forward or aft-mounted configuration. In these various embodiments turbine engine 10 comprises any of a high-bypass turbofan, a low-bypass turbofan or a turboprop engine, and the number of spools and the shaft configurations may vary.

In operation of turbine engine 10, incoming airflow F₁ enters inlet 22 and divides into core flow F_{C} and bypass flow F_{B}, downstream of fan 12, core flow F_{C} propagates along the core flowpath through compressor section 16, combustor 18 and turbine section 20, and bypass flow F_{B} propagates along the bypass flowpath through bypass duct 14.

LPC section 30 and HPC section 32 of compressor 16 are utilized to compress incoming air for combustor 18, where fuel is introduced, mixed with air and ignited to produce hot combustion gas. Depending on the embodiment, fan 12 also provides some degree of compression (or pre-compression) to core flow F_{C}, and LPC section 30 may be omitted. Alternatively, an additional intermediate spool is included, for example in a three-spool turboprop or turbofan configuration.

Combustion gas exits combustor 18 and enters HPT section 38 of turbine 20, encountering turbine vanes 34 and turbine blades 36. Turbine vanes 34 turn and accelerate the flow, and turbine blades 36 generate lift for conversion to rotational energy via HPT shaft 42, driving HPT section 32 of compressor 16 via HPT shaft 42. Partially expanded combustion gas transitions from HPT section 38 to LPT section 40, driving LPC section 30 and fan 12 via LPT shaft 44. Exhaust flow exits LPT section 40 and turbine engine 10 via exhaust nozzle 24.

The thermodynamic efficiency of turbine engine 10 is tied to the overall pressure ratio, as defined between the delivery pressure at inlet 22 and the compressed air pressure entering combustor 18 from compressor 16. In general, a higher pressure ratio offers increased efficiency and improved performance, including greater specific thrust. High pressure ratios also result in increased peak gas path temperatures, higher core pressure and greater flow rates, increasing thermal and mechanical stress on engine components.

The present invention is intended to be used with stator airfoils in turbine engines. In particular with stator vanes in the compressor section of gas turbine engines.

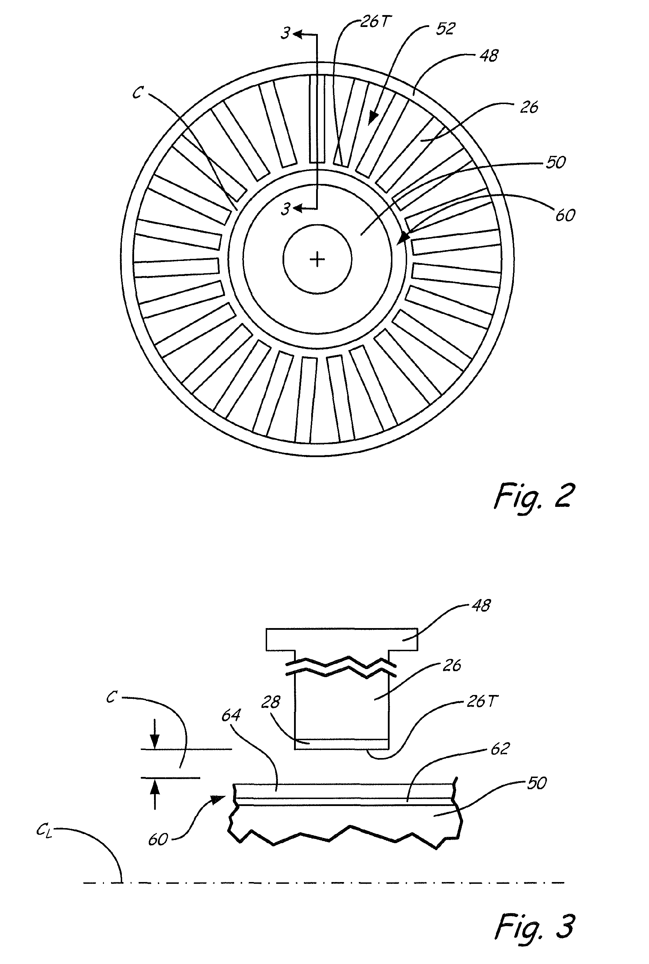

FIG. 2 is a cross section along line 2-2 of FIG. 1 of a casing 48 which has a rotor shaft 50 inside. Cantilever vanes 26 are attached to casing 48 at their radial outward ends 26R and are unsupported at their radial inward ends 26T in proximity with coating 60 on rotor shaft 50. Clearance C between the radial inward ends 26T of cantilever vanes 26 and coating 60 on rotor shaft 50 is desired to be maintained as small as possible to minimize leakage and maximize efficiency of gas turbine engine 10. Prior art sealing systems consist of two components, an abradable material and an abrading material. In the event of rub contact, the abradable material is eroded by the abrading material and the proper seal dimensions are preserved. Furthermore, frictional heating and potential burn through are avoided.

FIG. 3 shows the cross section along line 3-3 of FIG. 2 with a prior art cantilevered vane sealing system with casing 48 and vane 26. Abradable layer 28 on vane 26 makes tip 26T deliberately softer than coating 60 on rotor 50. In the event of contact, layer 28 abrades and heating and other damage to rotor 50 are minimized.

Abrading surface coating 60 and abradable coating 28 require repair or replacement during engine service. Both operations are time consuming and costly. The present invention minimizes the process by eliminating abradable coating 28 and replacing prior art abrading coating 60 with a coating of superior hardness and wear resistance. Cost and time savings are considerable. Repair of worn vane tips 26T, if necessary, during engine service is much simpler and less expensive than removing and replacing an abradable coating. The new rotor coating is strong enough to abrade the bare superalloy vane tips by themselves thereby eliminating necessity of an abradable coating.

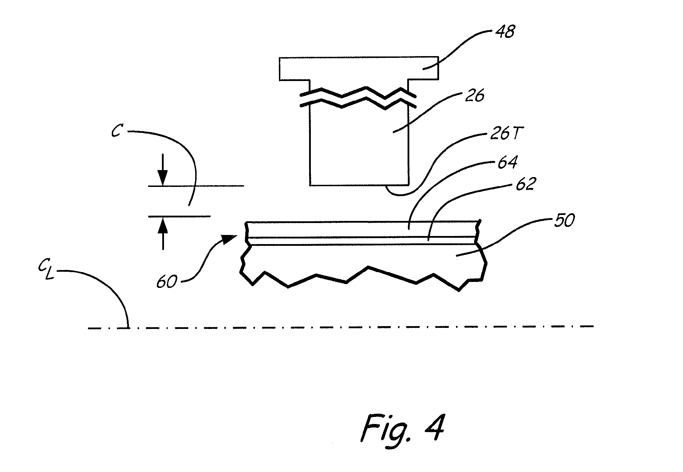

FIG. 4 shows the inventive rotor sealing system in detail. Abradable coating 28 has been eliminated leaving bare superalloy vane end 26T in proximity with rotor 50. Coating 60 is an yttria stabilized zirconia layer 64 with a metal bond coat 62. The compositions of yttria stabilized zirconia layer 64 and metal bond coat layer 62 are described in commonly owned patent 5,879,753. Although the compositions are the same, the methods of forming yttria stabilized zirconia layer 64 and bond coat layer 62 are different and are described in commonly owned application "Thermal Spray Coating Process for Compressor Shafts" (US Patent 12/941,994) filed on even date herewith.

Bond coat 62 is a nickel aluminum alloy or may be formed of MCrAl or MCrAlY where the metal M can be nickel (Ni), iron (Fe), or cobalt (Co) or combinations thereof, and the alloying elements are chromium (Cr), aluminum (Al), and yttrium (Y). For example, bond coat 62 may be 15-40 wt. % Cr, 6-15 wt. % Al, and 0.6-1.0 wt. % Y and the balance is cobalt, nickel, or iron and combinations thereof.

Ceramic top coat 64 is a dense thermally sprayed coating comprising 11-14 wt. % yttria and the balance zirconia. Preferably the coating contains about 12 wt. % yttria. The microstructure of dense ceramic top coat 60 comprises a layer of splats of yttria stabilized zirconia containing vertical microcracks that extend to the bond coat layer. This microstructure maintains the mechanical integrity of the coating during thermal cycling experienced with engine operation. The microstructure is controlled by the numerous variables of the coating process.

Bond coat 62 and ceramic top coat 64 of the invention are deposited by plasma spraying. In particular, air plasma spraying may be performed utilizing an F-4 model air plasma spray gun purchased from Plasma Technics Inc., now supplied by Sulzer Metco having facilities in Westbury, NY.

Processing parameters of interest include rotor shaft rotation rate, gun angle with respect to substrate surface, gun traverse rate, substrate preheat temperature, powder injection rate, and carrier and plasma gas flow rates. In general, it has been found that a close gun-to-substrate spray distance coupled with relatively high spray gun power results in the desired vertical segmentation or microcracking of the ceramic coating. As will be realized, the parameters may vary with the use of a different spray gun or fixture geometry. Accordingly, the parameters listed here may only be used as a guide for selecting parameters for different operating conditions.

The first step in the deposition process is to clean and otherwise prepare the rotor shaft surface. Conventional cleaning and preparation of the rotor surface is by methods known to those versed in the art of plasma spraying. Processes such as mechanical abrasion through vapor or air blast processes using dry or liquid carried abrasive particles impacting the surface are standard.

Coating deposition is carried out while rotor 50 is rotating around its axis. The spray gun nozzle is fixtured to allow it to traverse the length of rotor 50 in a direction parallel to the axis of rotor 50.

Bond coat layer 62 is then deposited on rotor 50. This step includes flowing bond coat powder and carrier gases into a high temperature plasma gas stream. In the plasma gas stream, the powder particles melt and are accelerated toward the substrate. Generally, the powder feed rate is adjusted to provide adequate consistency and amount of bond coating. The bond coat powder feed ranges from 10 to 75 grams per minute. Carrier gas flow (argon gas) is used to maintain the powder under pressure and facilitate powder feed. The carrier gas flow rate ranges from 7 to 12 standard cubic feet (198 to 340 liters) per hour.

The gases that make up the plasma gas stream for bond coat deposition are a primary gas (argon gas) and a secondary gas (hydrogen gas). Nitrogen gas may also be used as a primary gas and helium gas may also be used as a secondary gas. The primary gas flow rate in the gun ranges from 65 to 110 standard cubic feet (1841 to 3115 liters) per hour while the secondary gas flow rate ranges from 6 to 18 standard cubic feet (170 to 510 liters) per hour. Spray gun power generally ranges from 30 to 50 kilowatts.

Bond coat deposition is carried out with the spray gun nozzle at a distance ranging between about 4 to about 6 inches (10 to 15 centimeters) from the rotor hub surface in a direction substantially perpendicular to the surface of rotor 50. Spray gun traverse direction is in a direction substantially parallel to the axis of rotor 50. Spray gun traverse speed during bond coat deposition ranges from 5 to 30 inches (12.5 to 75 centimeters) per minute. During bond coat deposition, cylindrical rotor hub 50 rotates at a speed which ranges from 20 to 200 revolutions per minute. The surface speed of the rotor hub substrate ranges typically from 100 to 1000 surface feet (30 to 300 meters) per minute.

The next step includes forming a layer of ceramic top coat on the bond coat. This step includes flowing ceramic top coat powder and carrier gases into the high temperature plasma gas stream. Generally the powder feed rate should be adjusted to provide adequate mix to cover the substrate, yet not be so great as to reduce particle melting and ceramic coating vertical crack formation. Ceramic top coat powder feed rate ranges from 10 to 75 grams per minute. Carrier gas flow (argon gas) is used to maintain the powder under pressure and facilitate powder feed. The flow rate ranges from 6 to 12 standard cubic feet (170 to 340 liters) per hour.

The step of forming a spray of particles of heated ceramic top coat powder includes the injection of the top coat powder angled such that it imparts a component of velocity to the powder which is opposite to the direction of flow of the plasma toward the rotating fixture. This increases the residence time of the particles in the plasma gas and allows for better melting of the particles.

Primary gas flow (argon gas) in the gun ranges from 50 to 110 standard cubic feet (1416 to 3115 liters) per hour. Similarly, secondary gas flow (hydrogen gas) in the gun ranges from 5 to 20 standard cubic feet (142 to 566 liters) per hour. Spray gun power generally ranges from 30-50 kilowatts.

During the application of heated ceramic top coat powder to the rotating substrate (i.e. the rotor), the nozzle is at a distance ranging form 1.5 to 3.5 inches (3.8 to 8.9 centimeters) from the substrate in a direction substantially normal to the substrate surface and is translating in a direction substantially parallel to the axis of the rotor hub. The cylindrical rotor hub rotates at a speed which ranges from 20 to 100 revolutions per minute. Spray gun traverse speed across the substrate during deposition ranges from 5 to 25 inches (12.5 to 63 centimeters) per minute. The surface speed of the rotor hub ranges typically from 50 to 500 surface feet (15 to 150 surface meters) per minute. The gun to substrate distance may be varied with the intent of maintaining the appropriate temperature level at the substrate surface. A close gun to substrate distance is necessary for satisfactory vertical microcracking of the abrasive coating. The temperature of application may vary from 500°F to 1500°F (932°C to 2732°C).

An advantage of the present process is the reproducible and reliable results due to the use of control parameters. This process can be used to repetitively apply bond coating onto substrate surfaces or top coating onto bond coating layers. Another advantage of the present process is the application of coating to substrates without the use of additional heating apparatus for the substrates. During coating deposition the optimum amount of heat required is transmitted to the substrate through the plasma gas and the molten spray particles.

The coating microstructure comprises vertical microcracks resulting in exceptional resistance to spallation during thermal excursions. In one embodiment, ceramic coating 64 has a thickness ranging from about 5 mils to 80 mils (127 to 2032 microns) and bond coat 62 has a thickness ranging from about 2 mils to about 15 mils (51 to 381 microns).

One advantage of the zirconia containing 11 to 14 wt. % yttria coating described herein is its exceptional hardness of 7 on the Mohs scale. As such, in a rub relationship with a superalloy component, the superalloy is easily abraded by the ceramic. Another advantage of the ceramic coating of the instant invention is its resistance to spallation from thermally induced internal stresses during operative conditions. The vertical microcracks in the coating act as stress relievers during thermal excursions and prevent internal interfacial stress. A further advantage afforded by the coating is its low thermal conductivity of about 1.5 watts per meter Kelvin. The low thermal conductivity provides an advantage during rub events when frictional heat is generated in the contacting surface. The low thermal conductivity provides for heat dissipation by radiation and convection rather than by conduction into the underlying base metal of the substrate causing potential rotor failure by burn out.

In FIGS. 2-4, clearance C is expanded for purposes of illustration. In practice, clearance C may be, for example, about 25 mils to 55 mils (635 microns to 1400 microns) when the engine is cold to 0 mils to 35 mils (0 microns to 889 microns) during engine operation depending on specific operations and previous rub events that may have occurred.

While the invention has been described with reference to an exemplary embodiment(s), it will be understood by those skilled in the art that various changes may be made and equivalents may be substituted for elements thereof without departing from the scope of the invention defined by the claims. In addition, many modifications may be made to adapt a particular situation or material to the teachings of the invention without departing from the essential scope thereof. Therefore, it is intended that the invention not be limited to the particular embodiment(s) disclosed, but that the invention will include all embodiments falling within the scope of the appended claims.

## Claims

1. A method of forming a seal in a gas turbine engine, the method comprising:
providing an airfoil (26) with a radial outward end and a bare metal tip at a radial inward end;
providing a seal member (50) adjacent to the radial inward end of the airfoil wherein the seal member is coated with an abrasive material that abrades the bare metal tip.

2. The method of claim 1, wherein the airfoil is a compressor stator vane (26).

3. The method of claim 1 or 2, wherein the seal member includes a rotor (50) seal surface.

4. The method of claim 1, 2 or 3, wherein the airfoil (26) is supported at the radial outward end and is unsupported at the radial inward end.

5. The method of claim 1, 2, 3 or 4, wherein the abrasive material includes zirconium oxide.

6. The method of claim 5, wherein the zirconium oxide contains about 11-14 wt. % yttrium oxide.

7. The method of any preceding claim wherein the base metal of the airfoil is more abradable than the coating of abrasive material.

8. A combination for use in a gas turbine engine, the combination comprising:
an airfoil (26) with a radial outward end and a radial inward end;
a seal member (50) adjacent to the radial inward end of the airfoil wherein the seal member is coated with an abrasive material and the radial inward end of the airfoil is bare metal.

9. The combination of claim 8, wherein the airfoil (26) is supported at the radial outward end and unsupported at the radial inward end.

10. The combination of claim 8 or 9, wherein the base metal of the airfoil (26) is more abradable than the coating of abrasive material.

11. The combination of claim 8, 9 or 10, wherein the airfoil (26) is a compressor stator vane.

12. The combination of claim 8, 9, 10 or 11, wherein the seal member includes a rotor seal surface.

13. The combination of any one of claims 8 to 12, wherein the abrasive material includes zirconium oxide, and wherein the zirconium oxide preferably contains about 11-14wt. % yttrium oxide.

14. A gas turbine engine comprising:
an engine casing (48) extending circumferentially about an engine centerline axis; and
a compressor section (16), a combustor section (18), and a turbine section (20) within said engine casing;
wherein at least one of said compressor section and said turbine section includes the combination of any one of claims 8 to 13.

15. The gas turbine engine of claim 14 wherein the airfoil (26) is mounted at a radial outward end to the engine casing (48).
